# EUROPEAN PATENT APPLICATION

(11) **EP 3 923 184 A2**
(43) Date of publication of application: **15.12.2021**
(21) Application number: 21199712.7
(22) Date of filing: 29.09.2021
(51) Int. Cl.: G06K 9/00

(54) **METHOD AND SYSTEM FOR VEHICLE PARKING DETECTION, ELECTRONIC DEVICE AND STORAGE MEDIUM**

(30) Priority: 25.03.2021 CN 202110322295
(71) Applicant: Apollo Intelligent Connectivity (Beijing) Technology Co., Ltd., Beijing 100176 (CN)
(72) Inventor: Liu, Xiuzhi, Beijing, 100176 (CN); Wang, Xiaolong, Beijing, 100176 (CN); Tao, Shengzhao, Beijing, 100176 (CN)
(74) Representative: Maiwald Patent- und Rechtsanwaltsgesellschaft mbH

(57) **Abstract**

A method and a system for vehicle parking detection, an electronic device and a storage medium are disclosed, which relates to the field of artificial intelligence technologies such as deep learning and automatic driving. The method includes: obtaining a first lateral distance between a vehicle and a reference object in a site by a first distance sensor; obtaining a second lateral distance between the vehicle and the reference object by a second distance sensor; collecting a first scene image by a first camera, and obtaining a first longitudinal distance based on the first scene image, the first longitudinal distance being a distance between a first mark line on the vehicle and a first parking line in the site; and determining whether the vehicle is parked at a target location in the site based on the first lateral distance, the second lateral distance and the first longitudinal distance.

## Description

### TECHNICAL FIELD

The disclosure relates to the field of deep learning and automatic driving technologies in the artificial intelligence technologies, and in particular to a method for vehicle parking detection, a system for vehicle parking detection, a storage medium, an electronic device and a computer program product.

### BACKGROUND

In scenarios such as automatic driving and driver's license examination (i.e., a driving test), it is necessary to detect a parking result of a vehicle. A common detection solution is to detect whether the vehicle is located within the boundary of a parking space by manual measurement or using a sensor.

### SUMMARY

Embodiments of the disclosure in a first aspect provide a method for vehicle parking detection. The method includes: obtaining a first lateral distance between a vehicle and a reference object in a site by a first distance sensor; obtaining a second lateral distance between the vehicle and the reference object by a second distance sensor; collecting a first scene image by a first camera, and obtaining a first longitudinal distance based on the first scene image, the first longitudinal distance is a distance between a first mark line on the vehicle and a first parking line in the site; and determining whether the vehicle is parked at a target location in the site based on the first lateral distance, the second lateral distance and the first longitudinal distance.

Embodiments of the disclosure in a second aspect provide a system for vehicle parking detection. The system includes: a lateral distance measuring module, a first longitudinal distance measuring module and a control module.

The lateral distance measuring module is configured to obtain a first lateral distance between a vehicle and a reference object in a site by a first distance sensor, and obtain a second lateral distance between the vehicle and the reference object by a second distance sensor.

The first longitudinal distance measuring module is configured to collect a first scene image by a first camera, and obtain a first longitudinal distance based on the first scene image, the first longitudinal distance is a distance between a first mark line on the vehicle and a first parking line in the site.

The control module is configured to receive the first lateral distance and the second lateral distance sent by the lateral distance measuring module, receive the first longitudinal distance sent by the first longitudinal distance measuring module, and determine whether the vehicle is parked at a target location in the site based on the first lateral distance, the second lateral distance and the first longitudinal distance.

Embodiments of the disclosure in a third aspect provide an electronic device. The electronic device includes: at least one processor and a memory communicatively coupled to the at least one processor. The memory stores instructions executable by the at least one processor. When the instructions are implemented by the at least one processor, the at least one processor is caused to implement the method according to the first aspect of the disclosure.

Embodiments of the disclosure in a fourth aspect provide a non-transitory computer-readable storage medium storing computer instructions. The computer instructions are used to make the computer implement the method according to the first aspect of the disclosure.

Embodiments of the disclosure in a fifth aspect provide a computer program product including computer programs, and when the computer program is executed by a processor, the method according to the first aspect of the disclosure is implemented.

According to the technical solution of the disclosure, automatic quantitative measurement of vehicle parking is realized, human resources are saved, and the efficiency of vehicle parking detection is improved.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a method for vehicle parking detection according to an embodiment of the disclosure.
FIG. 2 is a flowchart of a method for vehicle parking detection according to a second embodiment of the disclosure.
FIG. 3 is a flowchart of a method for vehicle parking detection according to some embodiments of the disclosure.
FIG. 4 is a flowchart of a method for vehicle parking detection according to a third embodiment of the disclosure.
FIG. 5a is a schematic diagram of a preparation phase of the method for vehicle parking detection according to an embodiment of the disclosure.
FIG. 5b is a schematic diagram of a measurement phase of the method for vehicle parking detection according to an embodiment of the disclosure.
FIG. 6 is a flowchart of a method for vehicle parking detection according to a fourth embodiment of the disclosure.
FIG. 7 is a flowchart of monitoring in real time lateral distances according to an embodiment of the disclosure.
FIG. 8 is a structural block diagram of a system for vehicle parking detection according to an embodiment of the disclosure.
FIG. 9 is a structural block diagram of a system for vehicle parking detection according to another embodiment of the disclosure.
FIG. 10 is a structural block diagram of a system for vehicle parking detection according to another embodiment of the disclosure.
FIG. 11 is a structural block diagram of a system for vehicle parking detection according to another embodiment of the disclosure.
FIG. 12 is a structural block diagram of a system for vehicle parking detection according to another embodiment of the disclosure.
FIG. 13 is a structural block diagram of a system for vehicle parking detection according to another embodiment of the disclosure.
FIG. 14 is a structural block diagram of a system for vehicle parking detection according to another embodiment of the disclosure.
FIG. 15 is a block diagram of an electronic device used to implement the method for vehicle parking detection according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope of the disclosure. For clarity and conciseness, descriptions of well-known functions and structures are omitted in the following description.

In the related art, manual measurement requires high human resources with low detection efficiency. The sensor detects whether the vehicle is located within the boundary of the parking space, which only performs qualitative parking detection on the vehicle, instead of quantitative parking detection on the vehicle.

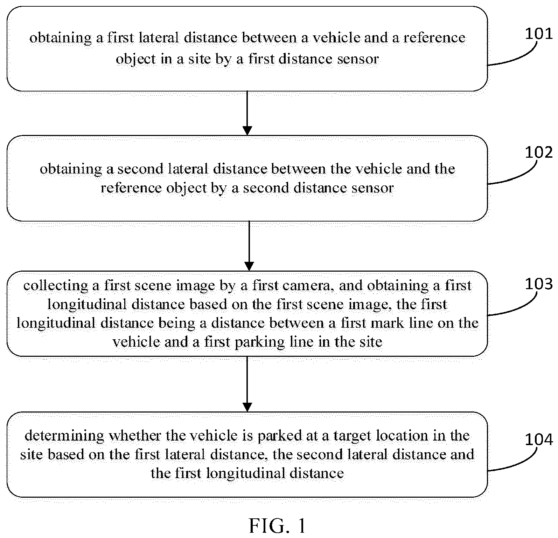

The disclosure provides a method for vehicle parking detection. In the technical solution by the method for vehicle parking detection, vehicle parking is automatically and quantitatively detected, which saves human resources and improves the efficiency of vehicle parking detection. FIG. 1 is a flowchart of a method for vehicle parking detection according to an embodiment of the disclosure. It should be noted that the method for vehicle parking detection may be applied to an electronic device in the embodiments of the disclosure. As illustrated in FIG. 1, the method for vehicle parking detection may include the following steps.

In block 101, a first lateral distance between a vehicle and a reference object in a site is obtained by a first distance sensor.

It may be understood that when performing vehicle parking detection, data measurement is required, and the detected data may include a longitudinal distance and a lateral distance. The lateral distance may be detected in a direction approximately perpendicular to the vehicle length, and the longitudinal distance may be detected in a direction approximately parallel to the vehicle length.

In some embodiments of the disclosure, the lateral distance may be a distance between the vehicle and the reference object in the site. There are many types of reference objects in the site, which may be selected according to specific application scenarios, such as road shoulders, and vehicles near the site, which is not limited in the embodiments.

The distance between the reference object in the site and the vehicle may be measured by the first distance sensor. Different first distance sensors may be selected for different cost budgets and application scenarios, such as a laser range finder, an ultrasonic sensor with temperature compensation, and improved sensors to the above two types of sensors, which is not limited in the disclosure. The measurement range of the ultrasonic sensor with temperature compensation is a place which reduces requirements for the reference object, and corrects the measurement data according to the external temperature, makes the measurement data more reliable.

It should be noted that the fixed location of the first distance sensor is adjusted according to different vehicles and environments, which is not limited in this embodiment. The fixed location includes but is not limited to any one of a wheel hub, a vehicle body, and a reference object.

In some embodiments of the disclosure, there are multiple methods for obtaining the first lateral distance, which includes but not limited to: (i) determining the data obtained by the first sensor as the first lateral distance; (ii) sampling the distance between the vehicle and the reference object for multiple times by the first distance sensor to obtain a plurality of sampling values, filtering a maximum value and a minimum value from the plurality of sampling values, performing calculation based on remaining sampling values after the filtering to obtain a calculation result, and determining the calculation result as the first lateral distance.

The method (ii) filters unreasonable data generated due to hardware impulse interference, and makes the measured data more accurate and reliable. Optionally, the first distance sensor may perform continuous sampling for 10 times, the 10 sampling results is sorted by sizes based on a bubble sorting algorithm, the maximum value and the minimum value are removed, and an average value of the remaining 8 sampling data is obtained and determined as the first lateral distance of this measurement.

In block 102, a second lateral distance between the vehicle and the reference object is obtained by a second distance sensor.

It may be understood that only the first lateral distance cannot be used to determine whether the current vehicle meets the requirements of lateral distances. It is necessary to obtain a distance between the vehicle and the reference object located in another location by the second distance sensor, which may be referred to as the second lateral distance. The second lateral distance may be obtained by the second distance sensor.

In some embodiments of the disclosure, similar to the first distance sensor, a type and a fixed location of the second distance sensor, and a type of the reference object are selected according to different application scenarios, which are not limited in this embodiment. Similar to the first lateral distance, the second lateral distance may be obtained by performing direct sampling by the second distance sensor. The second lateral distance may also be obtained by the second distance sensor performing sampling for multiple times, and processing the sampled data.

In block 103, a first scene image is collected by a first camera, and a first longitudinal distance is obtained based on the first scene image. The first longitudinal distance is a distance between a first mark line on the vehicle and a first parking line in the site.

In some embodiments of the disclosure, there are marks on the vehicle and the site. The mark on the vehicle is called the first mark line, and the mark in the site is called the first parking line. It may be understood that the first mark line is configured to mark a real longitudinal location of the vehicle, and the first parking line is configured to mark a target longitudinal location of the vehicle. The first longitudinal distance is a distance between the real longitudinal location of the vehicle and the target longitudinal location, that is, the distance between the first mark line and the first parking line. It may be understood that a style of the first mark line may be the same as or different from a style of the first parking line. When the style of the first mark line is different from the style of the first parking line, different styles are selected according to specific application scenarios, such as one or more of different colors and different shapes, which is not limited in this embodiment.

The first scene image containing the first mark line and the first parking line is captured by the first camera. The fixed location of the first camera is not limited in the embodiment, and is selected according to different conditions of a vehicle and a venue. For example, the first camera may be fixed on a vehicle or a site.

According to the image processing technology, the first mark line and the first parking line may be extracted from the first scene image. According to the camera ranging technology, the longitudinal distance between the first mark line and the first parking line may be obtained, which is determined as the first longitudinal distance. The camera ranging technology is selected according to different scenarios, such as any of a monocular ranging technology and a binocular ranging technology, which is not limited in this embodiment.

In block 104, it is determined whether the vehicle is parked at a target location in the site based on the first lateral distance, the second lateral distance and the first longitudinal distance.

It may be understood that, the first lateral distance, the second lateral distance, and the first longitudinal distance are obtained by the above steps, and a location of the vehicle relative to the reference object in the site is determined according to the above parameters, to determine whether the vehicle is parked at the target location in the site.

In some embodiments of the disclosure, two thresholds, i.e., a lateral distance threshold and a longitudinal distance threshold, may be preset respectively. The magnitude of these two thresholds may be adjusted according to the size of the vehicle and different requirements of a parking accuracy. When the first lateral distance and the second lateral distance meet the lateral distance threshold, and the first longitudinal distance meets the first longitudinal threshold, it is considered that the vehicle is parked at the target location in the site. When any one of the first lateral distance, the second lateral distance, and the first longitudinal distance does not meet the corresponding threshold, it is considered that the vehicle is not parked at the target location in the site.

It may be understood that the method for vehicle parking detection in the embodiments of the disclosure may be applied to different scenarios, including but not limited to: 1) detection of parking performance of an autonomous vehicle; 2) detection of vehicle parking results in a manual parking; and 3) determining whether the parking location of the vehicle meets aboard conditions for the disabled.

According to the method for vehicle parking detection in the embodiments of the disclosure, the first lateral distance and the second lateral distance are obtained by the distance sensors. The first longitudinal distance between the first mark line and the first parking line is obtained by the camera. According to the first lateral distance, the second lateral distance and the first longitudinal distance, it is determined whether the vehicle is parked at the target location.

With this method, determining whether the vehicle is parked at the target location is simplified to judge the above three indicators, and measuring the first longitudinal distance is simplified to measure the distance between the first mark line and the first parking line. The quantity of measurement data is reduced, the difficulty of measurement data is reduced, and automatic and quantitative standardized measurement is realized while the detection accuracy is enhanced. Meanwhile, the manual measurement is not required, which saves human resources and improves the efficiency of vehicle parking detection.

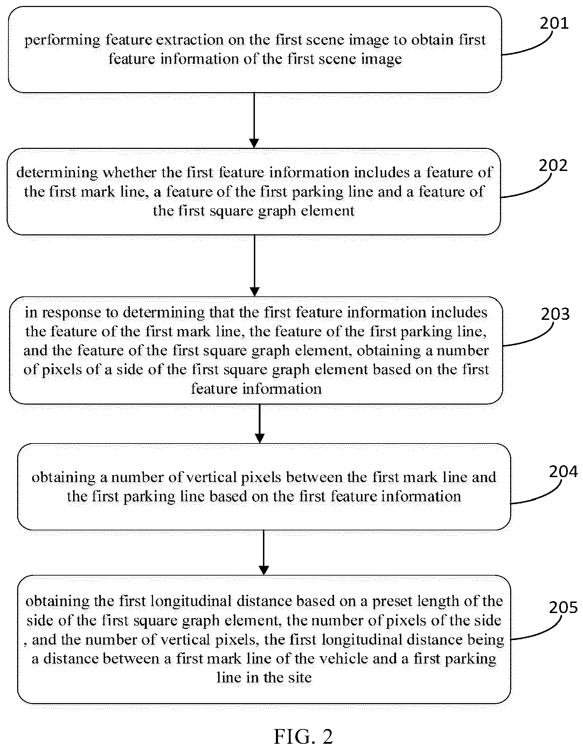

In the second embodiment of the disclosure, when the first longitudinal distance in the first embodiment is obtained, the first longitudinal distance is determined by means of a first square graph element, which is marked in the site for calibration. The second embodiment specifically illustrates the method for vehicle parking detection in FIG. 1. FIG. 2 is a flowchart of a method for vehicle parking detection according to the second embodiment of the disclosure. As illustrated in FIG. 2, the block 103 in FIG. 1 may include blocks 201 to 205.

In block 201, a first scene image is collected by a first camera, feature extraction is performed on the first scene image to obtain first feature information of the first scene image.

In some embodiments of the disclosure, the first camera may be a monocular camera, and the image collected by the camera is the first scene image. It may be understood that different deep learning models may be preset for different application scenarios. The deep learning models include, but are not limited to, any of a convolutional neural network and a region-based full convolutional network. It is possible to obtain images by the first camera based on different external environments, and the collected images are used to train the preset model.

It may be understood that vehicle parking mostly occurs in outdoor scenarios. The collected images in different external environments are used to train the preset model, to make the model recognize the first mark line, the first parking line and the first square graph under different lighting and weather conditions.

The trained preset model is configured to perform feature extraction on the first scene image, and the first feature information corresponding to the first scene image is obtained.

In block 202, it is determined whether the first feature information includes a feature of the first mark line, a feature of the first parking line and a feature of the first square graph element.

The first longitudinal distance is obtained based on the first mark line, the first parking line, and the first square graph element. It may be understood that the first scene image needs to include the first mark line, the first parking line, and the first square graph element. In some embodiments of the disclosure, it is possible to determine whether the first scene image includes the first mark line, the first parking line, and the first square graph element by detecting whether the first feature information contains the feature of the first mark line, the feature of the first parking line, and the feature of the first square graph element.

In some embodiments of the disclosure, when the first feature information does not contain at least any one of the feature of the first mark line, the feature of the first parking line, and the feature of the first square graph element, it is determined that the vehicle is not parked at the target location in the site. In some cases, although the vehicle is parked at the target location, the first feature information is still incomplete, and the vehicle parking system needs to be debugged.

In block 203, in response to determining that the first feature information includes the feature of the first mark line, the feature of the first parking line, and the feature of the first square graph element, a number of pixels of a side of the first square graph element is obtained based on the first feature information.

In some embodiments of the disclosure, in the case where the first feature information contains the feature of the first mark line, the feature of the first parking line, and the feature of the first square graph element, a location of the first square graph element in the first scene image is obtained based on the feature of the first square graph element in the first feature information, to obtain the number of pixels of the side of the first square graph element in the first scene image. For example, the first square graph element in the first scene image may be recognized based on its feature, four vertex coordinates of the first square graph element may be determined, and the number of pixels for each side of the first square graph element may be calculated based on these coordinates.

In block 204, a number of vertical pixels between the first mark line and the first parking line is obtained based on the first feature information.

In some embodiments of the disclosure, a location of the first mark line and a location of the first parking line in the first scene image may be obtained according to the feature of the first mark line and the feature of the first parking line in the first feature information, Thus, the number of vertical pixels between the first mark line and the first parking line in the first scene image is obtained in a direction vertical to the vehicle length.

In block 205, the first longitudinal distance is obtained based on a preset length of the side of the first square graph element, the number of pixels of the side of the first square graph element, and the number of vertical pixels. The first longitudinal distance is the distance between the first mark line of the vehicle and the first parking line in the site.

It may be understood that in some embodiments of the disclosure, the longitudinal distance between the first mark line and the first parking line of the site may be referred to as the first longitudinal distance, and the first longitudinal distance may be expressed as D₃. In addition, the preset length of the side of the first square graph element may be expressed as L, the number of pixels of the side of the first square graph element obtained in block 203 may be expressed as B, and the number of vertical pixels obtained in block 204 may be expressed as C. Then, the first longitudinal distance D₃ may be calculated by D₃/C=L/B.

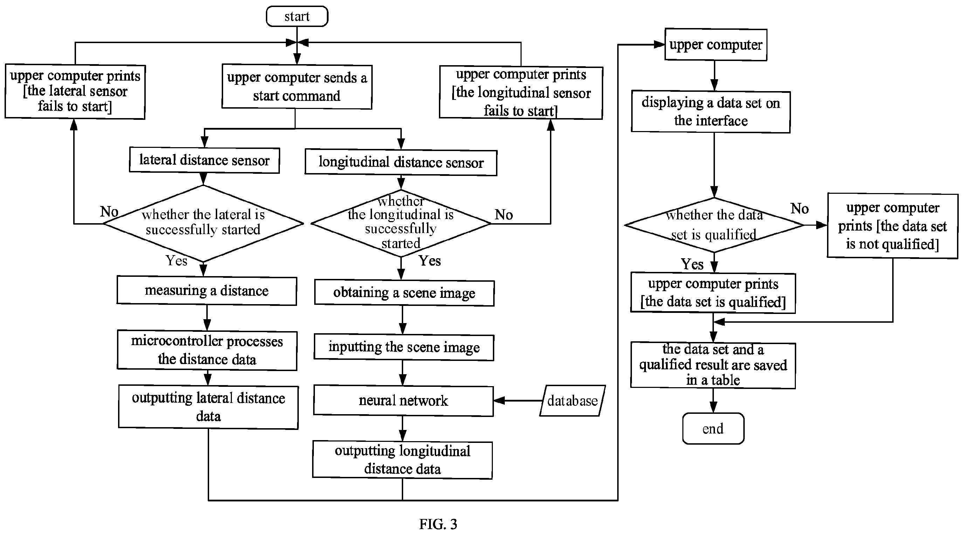

In some embodiments of the disclosure, the process of vehicle parking detection is shown in FIG. 3, FIG. 3 is a flowchart of a method for vehicle parking detection according to some embodiments of the disclosure.

In FIG. 3, the lateral distance sensors include: a first distance sensor and a second distance sensor. The longitudinal distance sensor includes: a first camera. An upper computer sends a start command to activate/start the lateral distance sensor and the longitudinal distance sensor. The upper computer herein may be an electronic device that performs data processing in the embodiments of the disclosure.

It may be understood that for the lateral distance sensor, if the lateral distance sensor fails to start, the upper computer prints "the lateral distance sensor fails to start" and sends the start command again until the lateral distance sensor is successfully started. When the lateral distance sensor is successfully started, the first distance sensor and the second distance sensor perform distance measurements, and the microcontroller performs data processing on the measured distances. The processed lateral distances will be output, and the upper computer will receive the lateral distances.

For the longitudinal distance sensor, if the longitudinal distance sensor fails to start, the upper computer prints "the longitudinal distance sensor fails to start" and sends the start command again until the longitudinal distance sensor is successfully started. When the longitudinal distance sensor is successfully started, the scene image is obtained and input into the neural network model trained in advance using the database to obtain the longitudinal distance data. The longitudinal distance data will be output, and the upper computer will receive the longitudinal distance data.

For the upper computer, the lateral distance data and the longitudinal distance data are received and displayed on the interface. The upper computer then determines whether the data set (including the lateral and longitudinal distance data) is qualified. When the data set is qualified, the upper computer prints "the data set passes the test". When the data set is not qualified, the upper computer prints "the data set fails to pass the test". The data and its corresponding results are saved in a table.

According to the method for vehicle parking detection in the embodiments of the disclosure, the first mark line, the first parking line and the first square graph element are extracted from the first scene image. Through the first square graph element, the relationship between the number of pixels in the first scene image and the distance in the actual scene is obtained. Thus, the first longitudinal distance is obtained based on the distance between the first mark line and the first parking line in the first scene image. The method has low cost, fast detection speed and high efficiency, since the first longitudinal distance is obtained based on the known data and the data obtained by the camera.

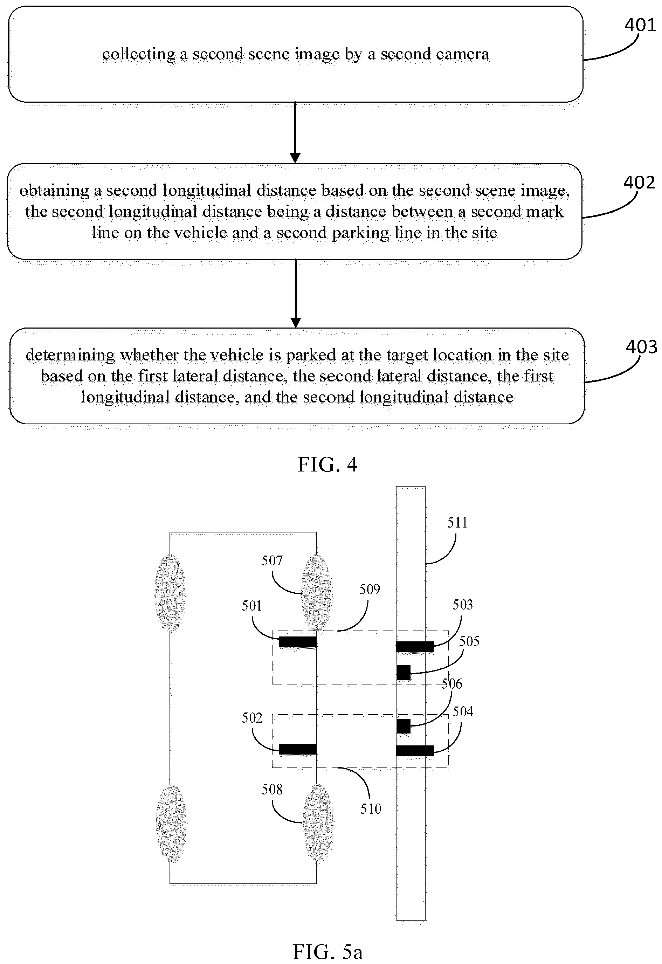

In the third embodiment of the disclosure, in order to obtain a more accurate vehicle longitudinal distance, a second square graph element may be set in the site, and the second camera is used to obtain the second longitudinal distance. Blocks 401 to 403 may also be included in the method which may be specifically illustrated by FIG. 4.

FIG. 4 is a flowchart of a method for vehicle parking detection according to a third embodiment of the disclosure. The method includes the following steps.

In block 401, a second scene image is collected by a second camera.

In some embodiments of the disclosure, the second camera may be a monocular camera, and the image collected by the camera is the second scene image.

In block 402, a second longitudinal distance is obtained based on the second scene image. The second longitudinal distance is a distance between a second mark line on the vehicle and a second parking line in the site.

In some embodiments of the disclosure, in addition to the first mark line and the first parking line, the second mark line may also be marked on the vehicle, and the second parking line may be marked in the site. Similarly, the second mark line is used to mark a real longitudinal location of the vehicle. The second parking line is used to mark a target longitudinal location of the vehicle. It may be understood that, the first mark line corresponds to the first parking line, and the second mark line corresponds to the second parking line.

According to the image processing technology, the second mark line and the second parking line may be extracted from the second scene image. According to the camera ranging technology, the longitudinal distance between the second mark line and the second parking line may be obtained, which is determined as the second longitudinal distance. The camera ranging technology is selected according to different scenarios, such as any of a monocular ranging technology and a binocular ranging technology, which is not limited in this embodiment.

In some embodiments of the disclosure, the step of obtaining the second longitudinal distance according to the second scene image may include the followings steps.

In step 1, feature extraction is performed on the second scene image to obtain second feature information of the second scene image.

In some embodiments of the disclosure, according to different application scenarios, different deep learning models are preset, including but not limited to: any of a convolutional neural network and a region-based full convolutional network. It is possible to obtain images by the second camera based on different external environments, and the obtained images are used to train the preset model.

It may be understood that when the second mark line has the same style as the first mark line, and the second parking line has the same style as the second parking line, the model for extracting the second feature information is the same as the model for extracting the first feature information.

The trained preset model is configured to perform feature extraction on the second scene image, and the second feature information corresponding to the second scene image is obtained.

In step 2, it is determined whether the second feature information includes a feature of the second mark line, a feature of the second parking line, and a feature of the second square graph element.

The second longitudinal distance is obtained based on the second mark line, the second parking line, and the second square graph element. It may be understood that the second scene image needs to include the second mark line, the second parking line, and the second square graph element. In some embodiments of the disclosure, it is possible to determine whether the second scene image includes the second mark line, the second parking line and the second square graph element by detecting whether the second feature information contains the feature of the second mark line, the feature of the second parking line, and the feature of the second square graph element.

In step 3, in response to determining that the second feature information includes the feature of the second mark line, the feature of the second parking line, and the feature of the second square graph element, a number of pixels of a side of the second square graph element is obtained based on the second feature information.

In some embodiments of the disclosure, in the case where the second feature information contains the feature of the second mark line, the feature of the second parking line, and the feature of the second square graph element, a location of the second square graph element in the second scene image is obtained based on the feature of the second square graph element in the second feature information, to obtain the number of pixels of the side of the second square graph element in the second scene image. The number of pixels of the side of the second square graph element may be calculated in a similar way to that of the first square graph element.

In step 4, a number of vertical pixels between the second mark line and the second parking line is obtained based on the second feature information.

In some embodiments of the disclosure, a location of the second mark line and a location of the second parking line in the second scene image may be obtained based on the feature of the second mark line and the feature of the second parking line in the second feature information, Thus, the number of vertical pixels between the second mark line and the second parking line in the second scene image is obtained.

In step 5, the second longitudinal distance is obtained based on a preset length of the side of the second square graph element, the number of pixels of the side of the second square graph element, and the number of vertical pixels.

It may be understood that in some embodiments of the disclosure, the longitudinal distance between the second mark line and the second parking line in the site may be referred to as the second longitudinal distance, and the second longitudinal distance may be expressed as D₄. In addition, the preset length of the side of the second square graph element is expressed as L', the number of pixels of the side of the first square graph element obtained in step 3 is expressed as B', and the number of vertical pixels obtained in step 4 is expressed as C'. Then, the second longitudinal distance D₄ is calculated by D₄/C'=L'/B'.

In block 403, it is determined whether the vehicle is parked at the target location in the site based on the first lateral distance, the second lateral distance, the first longitudinal distance, and the second longitudinal distance.

It may be understood that in the above steps, the first lateral distance, the second lateral distance, the first longitudinal distance, and the second longitudinal distance are obtained, and the location of the vehicle relative to the reference object in the site is determined based on the above parameters, to determine whether the vehicle is parked at the target location in the site.

In some embodiments of the disclosure, the preparation phase of the method for vehicle parking detection is shown in FIG. 5a, FIG. 5a is a schematic diagram of a preparation phase of the method for vehicle parking detection according to an embodiment of the disclosure.

In FIG. 5a, the first camera (not shown) and the second camera (not shown) are fixed on the vehicle, the front door and the rear door of the vehicle are respectively pasted with a purple first mark line 501 and a purple second mark line 502, the corresponding locations in the site are respectively pasted with a blue first parking line 503 and a blue second parking line 504. An orange first square graph element 505 and an orange second square graph element 506 are also pasted in the site. The locations of these marks are known, and the first square graph element 505 and the second square graph element 506 are pasted at the locations between the first parking line 503 and the second parking line 504. In addition, the first mark line 501 corresponds to the first parking line 503, the second mark line 502 corresponds to the second parking line 504. It may be understood that the first scene image captured by the first camera may include a range shown by a dashed frame 509. As illustrated in FIG. 5a, the dashed frame 509 includes the first mark line 501, the first parking line 503 and the first square graph element 505. The second scene image collected by the second camera may include a range shown by the dashed frame 510. As shown in FIG. 5a, the dashed frame 510 includes the second mark line 502, the second parking line 504, and the second square graph element 506.

There are a first distance sensor (not shown) and a second distance sensor (not shown) in FIG. 5a. The sensors may be ultrasonic sensors and are fixed respectively to a front hub 507 and a rear hub 508.

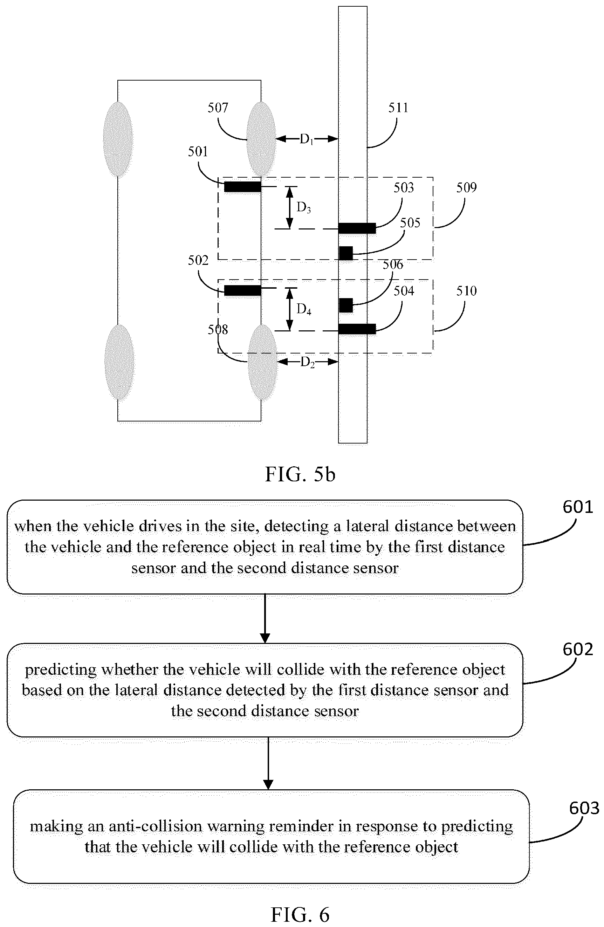

In some embodiments of the disclosure, the measurement phase of the method for vehicle parking detection is shown in FIG. 5b, FIG. 5b is a schematic diagram of a measurement phase of the method for vehicle parking detection according to an embodiment of the disclosure.

In FIG. 5b, the first camera is configured to collect the first scene image, and the second camera is configured to collect the second scene image. The first scene image and the second scene image are processed. After processing the images, the first longitudinal distance D₃ and the second longitudinal distance D₄ are obtained, and are transmitted to the upper computer.

In FIG. 5b, the first distance sensor may be configured to obtain the first lateral distance D₁ between the front hub and a reference object 511. The second distance sensor is configured to obtain the second lateral distance D₂ between the rear hub and the reference obj ect 511. The lateral data is processed by a single-chip microcomputer, and sent to the upper computer through 2.4G wireless communication transmission.

In some embodiments of the disclosure, a parking detection report is generated, and the report is generated through the following steps 1 and 2.

In step 1, the parking detection result of the vehicle is obtained.

It may be understood that when the lateral distance and the longitudinal distance meet the requirements at the same time, the parking detection result is that the vehicle is parked at the target location. When the lateral and/or longitudinal distance do not meet the requirements, the parking detection result is that the vehicle is not parked at the target location. There are many methods for obtaining the parking detection result, such as, obtaining through wired transmission or obtaining through wireless transmission, which is not limited in the embodiment.

In FIG. 5b, the upper computer is configured to obtain the parking detection result of the vehicle through 2.4G wireless communication transmission, and display the result.

In step 2, a parking detection report is generated based on the first lateral distance, the second lateral distance, the first longitudinal distance and the parking detection result.

In some embodiments of the disclosure, the parking detection report may be generated based on the first lateral distance, the second lateral distance, the first longitudinal distance and the corresponding parking detection result.

In FIG. 5b, the data and the corresponding parking detection result are saved to designated locations in a table, and the parking detection report is generated based on the table. In the report, a comprehensive performance of vehicle parking is analyzed intuitively and quantitatively.

In some embodiments of the disclosure, when the vehicle is equipped with an unmanned driving system, the performance of the autonomous system may be analyzed based on the parking detection report, and corresponding debugging and iterative testing are carried out.

According to the method for vehicle parking detection in the embodiments of the disclosure, a more accurate parking location of the vehicle may be detected in addition to the first lateral distance, the second lateral distance, the first longitudinal distance, and the second longitudinal distance in the obtained data.

In the fourth embodiment of the disclosure, in order to ensure the safety during parking the vehicle, the first distance sensor and the second distance sensor may also be configured to monitor in real time changes in the lateral distance based on the above embodiments. In order to explain the technical means more clearly, the fourth embodiment may be used to specifically describe the technical means based on the method for vehicle parking detection of the above embodiments. In some embodiments of the disclosure, blocks 601 to 603 are further included in the method.

As illustrated in FIG. 6, FIG. 6 is a flowchart of a method for vehicle parking detection according to a fourth embodiment of the disclosure, which specifically includes the following steps.

In block 601, when the vehicle drives in the site, a lateral distance between the vehicle and the reference object is detected in real time respectively by the first distance sensor and the second distance sensor.

It may be understood that the vehicle will eventually park next to the reference object in the site. When the automatic drive system has not been successfully debugged or the driver makes a mistake in operation, the lateral distance of the vehicle is too small, and the vehicle may collide with the reference object.

In some embodiments of the disclosure, when the vehicle drives in the site, the lateral distance between the vehicle and the reference object may be detected in real time respectively by the first distance sensor and the second distance sensor.

In block 602, it is predicted whether the vehicle will collide with the reference object based on the lateral distances between the vehicle and the reference object detected by the first distance sensor and the second distance sensor.

It may be understood that in some embodiments of the disclosure, a threshold may be preset. When the real-time lateral distance detected from the first distance sensor, and/or the real-time lateral distance detected from the second distance sensor is less than the threshold, it may be predicted that the vehicle will collide with the reference object.

In block 603, an anti-collision warning reminder is made in response to predicting that the vehicle will collide with the reference object.

In some embodiments of the disclosure, when it is predicted that the vehicle will collide, an anti-collision warning reminder will be made. In different application scenarios, there may be different anti-collision warning reminders, which are not limited in this embodiment , including but not limited to the followings: i) making a buzzer to remind the driver to take over the vehicle or pay attention to driving, and ii) connecting a braking system to directly brake the vehicle.

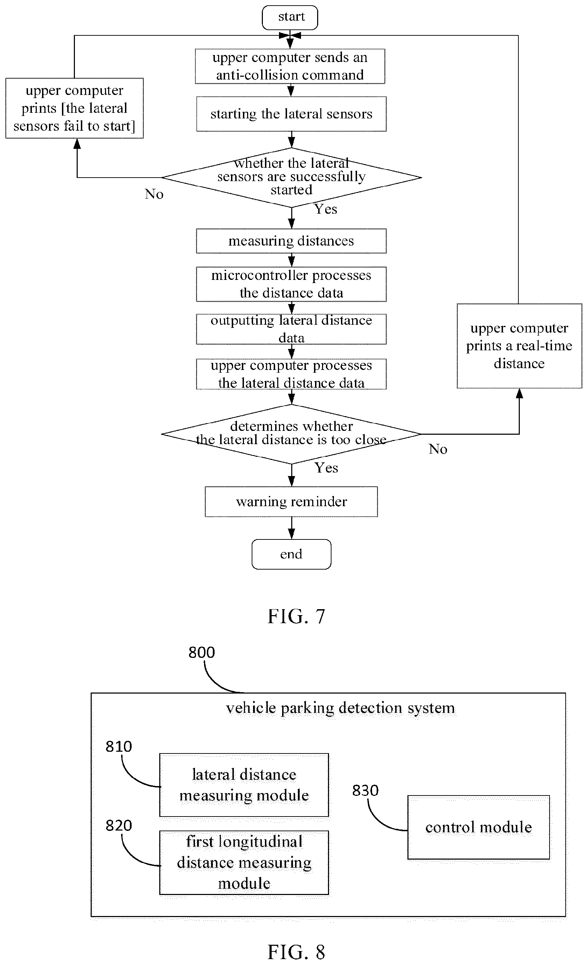

In some embodiments of the disclosure, the flowchart of using the first distance sensor and the second distance sensor to monitor in real time changes in the lateral distance is shown in FIG. 7. FIG. 7 is a flowchart of monitoring in real-time a lateral distance according to some embodiments of the disclosure.

In FIG. 7, the lateral distance sensors include: a first distance sensor and a second distance sensor. It may be understood that, the upper computer sends an anti-collision command to activate the lateral distance sensors. When the lateral distance sensors fail to start, the upper computer prints "the lateral sensors fail to start" and sends the anti-collision command again until the lateral distance sensors are successfully started. When the lateral distance sensors are started successfully, the first distance sensor and the second distance sensor measure the lateral distance, and the microcontroller performs data processing. The processed data will be output, and the upper computer will continue to process the data and determine whether the lateral distance is too close. When the lateral distance is too close, a warning reminder will be made. When the distance is not too close, the upper computer will print the real-time lateral distance, and the upper computer may send the anti-collision command again to conduct real-time monitoring of the lateral distance.

According to the method for vehicle parking detection in the embodiments of the disclosure, the first distance sensor and the second distance sensor are configured to monitor the lateral distance between the vehicle and the reference object, thereby avoiding collisions and ensuring the safety during the detection process.

According to the embodiments of the disclosure, a system for vehicle parking detection is also provided.

FIG. 8 is a structural block diagram of a system for vehicle parking detection 800 according to an embodiment of the disclosure. As illustrated in FIG. 8, the system for vehicle parking detection 800 may include: a lateral distance measuring module 810, a first longitudinal distance measuring module 820, and a control module 830.

The lateral distance measuring module 810 is configured to obtain a first lateral distance between a vehicle and a reference object in a site by a first distance sensor, and obtain a second lateral distance between the vehicle and the reference object by a second distance sensor.

In an embodiment, the internal composition of the first distance sensor and/or the second distance sensor may include: an ultrasonic sensing unit, a STM32 (STMicroelectronics) micro-control unit, a 2.4G (GigaHertz) wireless transmission unit, an electric quantity display unit, a 5V (Volt) battery unit, a waterproof metal switch unit, a waterproof charging head unit, an upper shell and a lower shell. The upper shell has two round holes and grooves. The ultrasonic sensor unit includes two probes and a circuit board. The ultrasonic sensor unit is placed at the front end of the entire sensor. The two probes of the ultrasonic sensor unit extend into the two round holes on the upper shell. The circuit board of the ultrasonic sensor unit is placed within the grooves in the lower shell and fixed with screw holes. The 5V battery unit is placed within the lower shell and is glued to the lower shell surface by double-sided strong glues. The STM32 micro-control unit is placed above the 5V battery unit. The STM32 micro-control unit is configured to process data and control signal, and is fixed on the lower shell by hot melt adhesive. The electric quantity display unit is configured to display the electric quantity of the 5V battery unit, which is placed in the groove at the side wall of the lower shell. The 2.4G wireless transmission unit is placed behind the circuit board in the ultrasonic sensing unit for receiving signals from the upper computer and sending data from the ultrasonic sensing unit. There are the waterproof charging head unit with waterproof caps and the waterproof metal switch unit behind both sides of the lower shell.

The first longitudinal distance measuring module 820 is configured to obtain a first scene image collected by a first camera, and a first longitudinal distance based on the first scene image, the first longitudinal distance is a distance between a first mark line of the vehicle and a first parking line in the site.

The control module 830 is configured to receive the first lateral distance and the second lateral distance sent by the lateral distance measuring module, receive the first longitudinal distance sent by the first longitudinal distance measuring module, and determine whether the vehicle is parked at a target location in the site based on the first lateral distance, the second lateral distance and the first longitudinal distance.

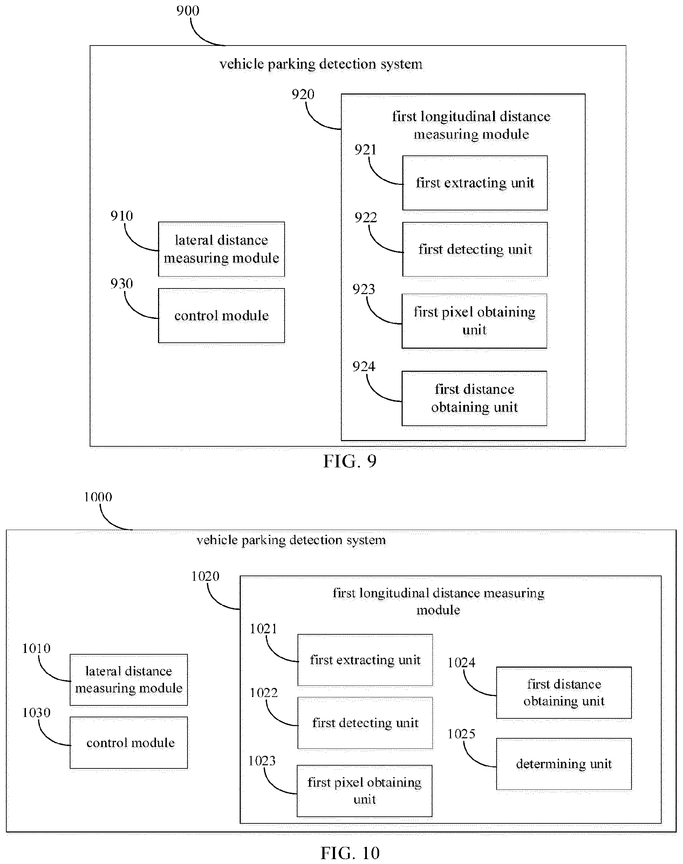

In an embodiment, as illustrated in FIG. 9, FIG. 9 is a structural block diagram of a system for vehicle parking detection 900 according to another embodiment of the disclosure. In the system for vehicle parking detection 900, the first longitudinal distance measuring module 920 includes: a first extracting unit 921 and a first detecting unit 922, a first pixel obtaining unit 923 and a first distance obtaining unit 924.

The first extracting unit 921 is configured to perform feature extraction on the first scene image to obtain first feature information of the first scene image.

The first detecting unit 922 is configured to determine whether the first feature information includes a feature of the first mark line, a feature of the first parking line and a feature of the first square graph element.

The first pixel obtaining unit 923 is configured to, in response to determining that the first feature information includes the feature of the first mark line, the feature of the first parking line, and the feature of the first square graph element, obtain a number of pixels of a side of the first square graph element based on the first feature information; and obtain a number of vertical pixels between the first mark line and the first parking line based on the first feature information.

The first distance obtaining unit 924 is configured to obtain the first longitudinal distance based on a preset length of the side of the first square graph element, the number of pixels of the side of the first square graph element, and the number of vertical pixels.

The modules 910 and control module 930 in FIG. 9 have the same function and structure as the modules 810 and control module830 in FIG. 8.

In an embodiment, as illustrated in FIG. 10, FIG. 10 is a structural block diagram of a system for vehicle parking detection according to another embodiment of the disclosure. In the system for vehicle parking detection 1000, the first longitudinal distance measuring module 1020 further includes: a determining unit 1025.

The determining unit 1025 is configured to, when the first feature information does not include the feature of the first mark line, and/or, the first feature information does not include the feature of the first parking line, and/or, the first feature information does not include the feature of the first square graph element, determine that the vehicle is not parked at the target location in the site.

The modules 1010 and control module1030 in FIG. 10 have the same function and structure as the modules 910 and control module 930 in FIG. 9. The modules 1021-1024 in FIG. 10 have the same function and structure as the modules 921-924 in FIG. 9.

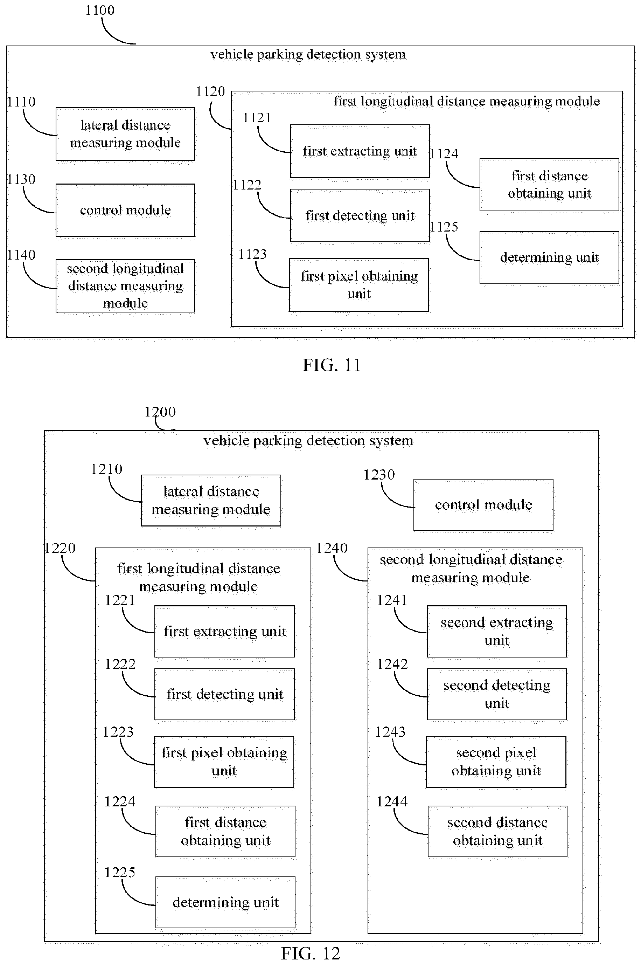

In an embodiment, as illustrated in FIG. 11, FIG. 11 is a structural block diagram of a system for vehicle parking detection according to another embodiment of the disclosure. The system for vehicle parking detection 1100 further includes: a second longitudinal distance measuring module 1140.

The second longitudinal distance measuring module 1140 is configured to obtain a second scene image collected by a second camera, and obtain a second longitudinal distance based on the second scene image, the second longitudinal distance is a distance between a second mark line of the vehicle and a second parking line of the site.

The modules 1110-1030 in FIG. 11 have the same function and structure as the modules 1010-1030 in FIG. 10.

In an embodiment, as illustrated in FIG. 12, it is a structural block diagram of a system for vehicle parking detection according to another embodiment of the disclosure. In the system for vehicle parking detection 1200, the second longitudinal distance measuring module 1240 further includes: a second extracting unit 1241, a second detecting unit 1242, and a second extracting unit 1241, a second pixel obtaining unit 1243 and a second distance obtaining unit 1244.

The second extracting unit 1241 is configured to perform feature extraction on the second scene image to obtain second feature information of the second scene image.

The second detecting unit 1242 is configured to determine whether the second feature information includes a feature of the second mark line, a feature of the second parking line, and a feature of the second square graph element.

The second pixel obtaining unit 1243 is configured to, in response to determining that the second feature information includes the feature of the second mark line, the feature of the second parking line, and the feature of the second square graph element, obtain a number of pixels of a side of the second square graph element based on the second feature information; and obtain a number of vertical pixels between the second mark line and the second parking line based on the second feature information.

The second distance obtaining unit 1244 is configured to obtain the second longitudinal distance based on a preset length of the side of the second square graph element, the number of pixels of the side of the second square graph element, and the number of vertical pixels.

The modules 1210-1230 in FIG. 12 have the same function and structure as the modules 1110-1130 in FIG. 11.

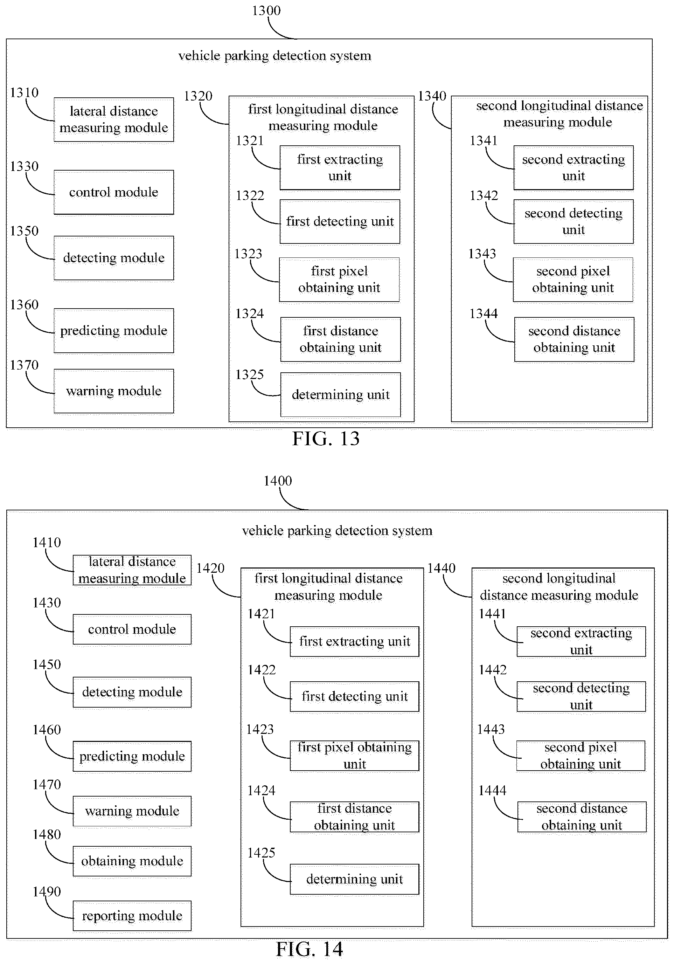

In an embodiment, as illustrated in FIG. 13, it is a structural block diagram of a system for vehicle parking detection according to another embodiment of the disclosure. The system for vehicle parking detection 1300 further includes: a detecting module 1350, a predicting module 1360, and a warning module 1370.

The detecting module 1350 is configured to, when the vehicle drives in the site, detect the first lateral distance between the vehicle and the reference object in real time through the first distance sensor and the second distance sensor.

The predicting module 1360 is configured to predict whether the vehicle will collide based on the lateral distance between the vehicle and the reference object, and real-time distance changes detected by the first distance sensor and the second distance sensor.

The warning module 1370 is configured to send an anti-collision warning reminder in response to predicting that the vehicle will collide.

The modules 1310 to 1340 in FIG. 13 have the same function and structure as the modules 1210 to 1240 in FIG. 12.

In an embodiment, as illustrated in FIG. 14, FIG. 14 is a block diagram of a system for vehicle parking detection according to an embodiment of the disclosure. The system for vehicle parking detection 1400 further includes: an obtaining module 1480 and a reporting module 1490.

The obtaining module 1480 is configured to obtain a parking detection result of the vehicle.

The reporting module 1490 is configured to generate a parking detection report based on the first lateral distance, the second lateral distance, the first longitudinal distance, and the parking detection result.

The modules 1410-1470 in FIG. 14 have the same function and structure as the modules 1310-1370 in FIG. 13.

Regarding the system in the embodiments, the specific manner in which each module performs operations has been described in detail in the embodiments of the method, which will not be repeated here.

According to the embodiments of the disclosure, the disclosure also provides an electronic device, a readable storage medium and a computer program product.

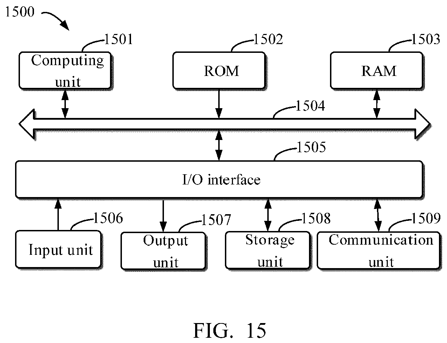

FIG. 15 is a block diagram of an electronic device 1500 configured to implement the method according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 15, the device 1500 includes a computing unit 1501 performing various appropriate actions and processes based on computer programs stored in a read-only memory (ROM) 1502 or computer programs loaded from the storage unit 1508 to a random access memory (RAM) 1503. In the RAM 1503, various programs and data required for the operation of the device 1500 are stored. The computing unit 1501, the ROM 1502, and the RAM 1503 are connected to each other through a bus 1504. An input/output (I/O) interface 1505 is also connected to the bus 1504.

Components in the device 1500 are connected to the I/O interface 1505, including: an inputting unit 1506, such as a keyboard, a mouse; an outputting unit 1507, such as various types of displays, speakers; a storage unit 1508, such as a disk, an optical disk; and a communication unit 1509, such as network cards, modems, wireless communication transceivers, and the like. The communication unit 1509 allows the device 1500 to exchange information/data with other devices through a computer network such as the Internet and/or various telecommunication networks.

The computing unit 1501 may be various general-purpose and/or dedicated processing components with processing and computing capabilities. Some examples of computing unit 1501 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 1501 executes the various methods and processes described above. For example, in some embodiments, the method may be implemented as a computer software program, which is tangibly contained in a machine-readable medium, such as the storage unit 1508. In some embodiments, part or all of the computer program may be loaded and/or installed on the device 1500 via the ROM 1502 and/or the communication unit 1509. When the computer program is loaded on the RAM 1503 and executed by the computing unit 1501, one or more steps of the method described above may be executed. Alternatively, in other embodiments, the computing unit 1501 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve defects such as difficult management and weak business scalability in the traditional physical host and Virtual Private Server (VPS) service. The server may also be a server of a distributed system, or a server combined with a block-chain.

According to the method for vehicle parking detection in the embodiments of the disclosure, the first lateral distance and the second lateral distance are obtained through a distance sensor. The first longitudinal distance is obtained between the first mark line and the first parking line by the camera. According to the first lateral distance, the second lateral distance and the first longitudinal distance, whether the vehicle is parked at the target location is determined.

With this method, determining whether the vehicle is parked at the target location is simplified to judge the above three indicators, and measuring the first longitudinal distance is simplified to measure the distance between the first mark line and the first parking line. While enhancing the detection accuracy, the quantity of measurement data is simplified, the difficulty of measurement data is reduced, and automatic quantitative standardized measurement is realized. Meanwhile, the manual measurement is not required, which saves human resources and improves the efficiency of vehicle parking detection.

The first mark line, the first parking line and the first square graph element are extracted from the first scene image. Through the first square graph element, the relationship between the number of pixels in the first scene image and the distance in the actual scene is obtained. Thus, the first longitudinal distance is obtained based on the distance between the first mark line and the first parking line in the first scene image. The method has low cost, fast detection speed and high efficiency, since the first longitudinal distance is obtained based on known data and data obtained by a camera.

In addition to the first lateral distance, the second lateral distance, the first longitudinal distance, and the second longitudinal distance in the obtained data, a more accurate parking location of the vehicle may be detected.

According to the method for vehicle parking detection in the embodiments of the disclosure, the first distance sensor and the second distance sensor are configured to monitor the distance between the vehicle and the reference object, thereby avoiding collisions and ensuring the safety during the detection process.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the principle of the disclosure shall be included in the protection scope of the disclosure.

## Claims

1. A method for vehicle parking detection, comprising:
obtaining (101) a first lateral distance (D₁) between a vehicle and a reference object (511) in a site by a first distance sensor;
obtaining (102) a second lateral distance (D₂) between the vehicle and the reference object by a second distance sensor;
collecting (103) a first scene image by a first camera, and obtaining a first longitudinal distance (D₃) based on the first scene image, the first longitudinal distance being a distance between a first mark line (501) on the vehicle and a first parking line (503) in the site; and
determining (104) whether the vehicle is parked at a target location in the site based on the first lateral distance, the second lateral distance and the first longitudinal distance.

2. The method of claim 1, wherein a first square graph element (505) is further provided in the site, and obtaining the first longitudinal distance in the first scene image comprises:
performing (201) feature extraction on the first scene image to obtain first feature information of the first scene image;
determining (202) whether the first feature information includes a feature of the first mark line, a feature of the first parking line and a feature of the first square graph element;
in response to determining that the first feature information includes the feature of the first mark line, the feature of the first parking line, and the feature of the first square graph element, obtaining (203) a number of pixels of a side of the first square graph element based on the first feature information;
obtaining (204) a number of vertical pixels between the first mark line and the first parking line based on the first feature information; and
obtaining (205) the first longitudinal distance based on a preset length of the side of the first square graph element, the number of pixels of the side of the first square graph element, and the number of vertical pixels.

3. The method of claim 1 or 2, further comprising:
when the first feature information does not include at least one of the feature of the first mark line, the feature of the first parking line, and the feature of the first square graph element, determining that the vehicle is not parked at the target location in the site.

4. The method of any one of claims 1 to 3, further comprising:
collecting (401) a second scene image by a second camera, and obtaining (402) a second longitudinal distance (D₄) based on the second scene image, the second longitudinal distance being a distance between a second mark line (502) on the vehicle and a second parking line (504) in the site;
wherein determining whether the vehicle is parked at the target location in the site comprises:
determining (403) whether the vehicle is parked at the target location in the site based on the first lateral distance, the second lateral distance, the first longitudinal distance, and the second longitudinal distance.

5. The method of claim 4, wherein a second square graph element (506) is further provided in the site, and obtaining the second longitudinal distance in the second scene image comprises:
performing feature extraction on the second scene image to obtain second feature information of the second scene image;
determining whether the second feature information includes a feature of the second mark line, a feature of the second parking line, and a feature of the second square graph element;
in response to determining that the second feature information includes the feature of the second mark line, the feature of the second parking line, and the feature of the second square graph element, obtaining a number of pixels of a side of the second square graph element based on the second feature information;
obtaining a number of vertical pixels between the second mark line and the second parking line based on the second feature information; and
obtaining the second longitudinal distance based on a preset length of the side of the second square graph element, the number of pixels of the side of the second square graph element, and the number of vertical pixels.

6. The method of claim 1, further comprising:
when the vehicle drives in the site, detecting (601) a lateral distance between the vehicle and the reference object in real time by the first distance sensor and the second distance sensor;
predicting (602) whether the vehicle will collide with the reference object based on the lateral distances detected by the first distance sensor and the second distance sensor; and
making (603) an anti-collision warning reminder in response to predicting that the vehicle will collide with the reference object.

7. The method of claim 1, wherein obtaining the first lateral distance between the vehicle and the reference object in the site by the first distance sensor comprises:
sampling the distance between the vehicle and the reference object for multiple times by the first distance sensor to obtain a plurality of values; and
filtering a maximum value and a minimum value from the plurality of sampling values, and determining a calculation result based on remaining sampling values as the first lateral distance.

8. The method of claim 1, further comprising:
obtaining a parking detection result of the vehicle; and
generating a parking detection report based on the first lateral distance, the second lateral distance, the first longitudinal distance, and the parking detection result.

9. A system for vehicle parking detection, comprising:
a lateral distance measuring module (810, 910, 1010, 1110, 1210, 1310, 1410), configured to obtain a first lateral distance (D₁) between a vehicle and a reference object (511) in a site by a first distance sensor, and obtain a second lateral distance (D₂) between the vehicle and the reference object by a second distance sensor;
a first longitudinal distance measuring module (820, 920, 1020, 1120, 1220, 1320, 1420), configured to collect a first scene image by a first camera, and obtain a first longitudinal distance (D₃) based on the first scene image, the first longitudinal distance being a distance between a first mark line (501) on the vehicle and a first parking line (503) in the site; and
a control module (830, 930, 1030, 1130, 1230, 1430), configured to receive the first lateral distance and the second lateral distance sent by the lateral distance measuring module, receive the first longitudinal distance sent by the first longitudinal distance measuring module, and determine whether the vehicle is parked at a target location in the site based on the first lateral distance, the second lateral distance and the first longitudinal distance.

10. The system of claim 9, wherein the first longitudinal distance measuring module comprises:
a first extracting unit (921, 1021, 1121, 1221, 1321, 1421), configured to perform feature extraction on the first scene image to obtain first feature information of the first scene image;
a first detecting unit (922, 1022, 1122, 1222, 1322, 1422), configured to determine whether the first feature information includes a feature of the first mark line, a feature of the first parking line and a feature of a first square graph element (505) provided in the site;
a first pixel obtaining unit (923, 1023, 1123, 1223, 1323, 1423), configured to, in response to determining that the first feature information includes the feature of the first mark line, the feature of the first parking line, and the feature of the first square graph element, obtain a number of pixels of a side of the first square graph element based on the first feature information; and obtain a number of vertical pixels between the first mark line and the first parking line based on the first feature information; and
a first distance obtaining unit (924, 1024, 1124, 1224, 1324, 1424), configured to obtain the first longitudinal distance based on a preset length of the side of the first square graph element, the number of pixels of the side of the first square graph element, and the number of vertical pixels;
wherein the system further comprises a determining unit (1025, 1125, 1225, 1325, 1425), configured to, when the first feature information does not include at least one of the feature of the first mark line, the feature of the first parking line and the feature of the first calibration square graph, determine that the vehicle is not parked at the target location in the site.

11. The system of claim 9 or 10, further comprising:
a second longitudinal distance measuring module (1140, 1240, 1340, 1440), configured to obtain a second scene image collected by a second camera, and obtain a second longitudinal distance (D₄) based on the second scene image, the second longitudinal distance being a distance between a second mark line (502) on the vehicle and a second parking line (504) in the site; and
the control module, configured to determine whether the vehicle is parked at the target location in the site based on the first lateral distance, the second lateral distance, the first longitudinal distance, and the second longitudinal distance;
wherein the second longitudinal distance measuring module comprises:
a second extracting unit (1241, 1341, 1441), configured to perform feature extraction on the second scene image to obtain second feature information of the second scene image;
a second detecting unit (1242, 1342, 1442), configured to determine whether the second feature information includes a feature of the second mark line, a feature of the second parking line, and a feature of a second calibration square graph element (506) provided in the site;
a second pixel obtaining unit (1243, 1343, 1443), configured to, in response to determining that the second feature information includes the feature of the second mark line, the feature of the second parking line, and the feature of the second calibration square graph, obtain a number of pixels of a side of the second calibration square graph based on the second feature information; and obtain a number of vertical pixels between the second mark line and the second parking line based on the second feature information; and
a second distance obtaining unit (1244, 1344, 1444), configured to obtain the second longitudinal distance based on a preset length of the side of the second calibration square graph, the number of pixels of the side of the second calibration square graph, and the number of vertical pixels.

12. The system of any one of claims 9 to 11, further comprising:
a detecting module (1350, 1450), configured to, when the vehicle drives in the site, detect a lateral distance between the vehicle and the reference object in real time by the first distance sensor and the second distance sensor;
a predicting module (1360, 1460), configured to predict whether the vehicle will collide with the reference object based on the lateral distances detected by the first distance sensor and the second distance sensor;
a warning module (1370, 1470), configured to make an anti-collision warning reminder in response to predicting that the vehicle will collide with the reference object;
an obtaining module (1480), configured to obtain a parking detection result of the vehicle; and
a reporting module (1490), configured to generate a parking detection report based on the first lateral distance, the second lateral distance, the first longitudinal distance, and the parking detection result;
wherein the lateral distance measuring module is further configured to:
sample the distance between the vehicle and the reference object for multiple times by the first distance sensor to obtain a plurality of sampling values; and
filter a maximum value and a minimum value from the plurality of sampling values, perform calculation based on remaining sampling values after the filtering to obtain a calculation result, and determine the calculation result as the first lateral distance.

13. An electronic device, comprising:
at least one processor; and
a memory communicatively connected to the at least one processor; wherein,
the memory stores instructions executable by the at least one processor, when the instructions are executed by the at least one processor, the at least one processor is caused to implement the method according to any one of claims 1-8.

14. A non-transitory computer-readable storage medium storing computer instructions, wherein the computer instructions are configured to make the computer implement the method according to any one of claims 1-8.

15. A computer program product, comprising a computer program, wherein when the computer program is executed by a processor, the method according to any one of claims 1-8 is implemented.
